Europäisches Patentamt

European Patent Office

Office européen des brevets

(19)

(11) EP 0 817 296 A1

(12) **DEMANDE DE BREVET EUROPEEN**

(43) Date de publication:
07.01.1998 Bulletin 1998/02

(51) Int Cl.6: **H01M 4/62**, H01M 10/40, H01M 4/04

(21) Numéro de dépôt: 97401584.4

(22) Date de dépôt: 03.07.1997

(84) Etats contractants désignés:
AT BE CH DE DK ES FI FR GB GR IE IT LI LU MC NL PT SE

(30) Priorité: 05.07.1996 FR 9608404

(71) Demandeur: SAFT
F-93230 Romainville (FR)

(72) Inventeurs:
• Simon, Bernard
92130 Issy Les Moulineaux (FR)
• Biensan, Philippe
91360 Epinay Sur Orge (FR)
• Galaj, Stanislas
94110 Arcueil (FR)

(74) Mandataire: Laroche, Danièle et al
c/o ALCATEL ALSTHOM,
Département de Propriété Industrielle,
30, avenue Kléber
75116 Paris (FR)

(54) **Electrode de générateur électrochimique rechargeable à électrolyte liquide organique et son procédé de fabrication**

(57) La présente invention a pour objet un générateur électrochimique rechargeable à électrolyte liquide organique dont la tension moyenne en décharge est supérieure à 3 volts, comportant au moins une électrode comprenant un collecteur de courant revêtu d'une pâte contenant la matière électrochimiquement active et un liant, caractérisé par le fait que ledit liant est un polymère partiellement salifié par un composé basique choisi parmi un hydroxyde d'ammonium quaternaire, l'hydroxyde de tétraalkylphosphonium, l'éthanolamine, la triéthanolamine, la créatinine, ledit polymère étant choisi parmi les homopolymères de l'acide acrylique, l'acide métacrylique, l'acrylamide, l'acide itaconique, l'acide sulfonique, leurs copolymères et leurs mélanges.

EP 0 817 296 A1

## Description

La présente invention concerne une électrode destinée à être utilisée dans un générateur électrochimique à électrolyte liquide organique, comme par exemple un générateur primaire ou un générateur rechargeable au lithium ou bien un supercondensateur à électrolyte liquide organique. Elle s'étend en outre au procédé de préparation et aux applications de cette électrode.

Aujourd'hui de nombreuses électrodes sont de type empâtée. Elles se composent d'un support conducteur électronique comme collecteur de courant, par exemple un feutre, une mousse, un déployé ou un feuillard perforé ou non, qui est revêtu d'une pâte. La pâte comprend principalement la matière active et un liant, auxquels on ajoute si nécessaire une poudre conductrice.

Le liant a pour fonction d'assurer la cohésion des grains de matière active entre eux et l'adhésion sur le support de l'électrode, avant l'assemblage de l'accumulateur et durant son fonctionnement. Au cours du fonctionnement de l'électrode, les transformations chimiques provoquent une variation du volume de l'électrode. Le liant doit être capable d'accompagner et de limiter les variations du volume de l'électrode. Si on utilise une proportion de liant élevé, la quantité de matière active est diminuée d'autant. Il est donc indispensable de minimiser la perte inévitable de capacité qui résulte de l'élaboration de l'électrode.

La surface électrochimiquement active d'une électrode dépend de la surface accessible à l'électrolyte. Cette surface dépend donc de la manière dont les grains de matière active sont enrobés et liés par le polymère. Si l'électrode est insuffisamment mouillée, la surface active est diminuée ce qui entraîne une augmentation de la densité de courant local et une plus faible capacité chargée.

Le liant doit aussi maintenir le contact électrique entre les grains de matière active. Si on utilise une proportion de liant élevé, la conductivité électrique de l'électrode est diminuée, ce qui produit une baisse de la tension et de la capacité de l'accumulateur.

Par conséquent on s'efforce d'introduire dans l'électrode la plus petite quantité possible de liant nécessaire mais suffisante pour assurer sa tenue mécanique.

Enfin le liant utilisé doit être compatible avec les composants de l'électrolyte liquide organique (gonflement, solubilité,...) et stable vis à vis des réducteurs et oxydants utilisés, comme par exemple les oxydes métalliques de l'électrode positive et le carbone lithié de l'électrode négative. C'est particulièrement vis à vis de l'électrode négative que la réactivité du liant doit être maîtrisée. En présence d'un solvant organique certains liants présentent une dégradation de leurs propriétés adhésives au cours du cyclage.

Une solution pour améliorer la stabilité de l'électrode a été proposée (EP-0 620 606) qui consiste à réaliser la pâte avec un liant qui est polymérisé après la mise en forme de l'électrode. Cette étape de polymérisation réalisée sur la pâte contenant déjà la matière active peut en affecter l'activité électrochimique. En outre c'est une étape qui s'ajoute au procédé, en augmentant le coût et la complexité.

Le brevet US-4,379,817 propose l'utilisation d'une large gamme de polymères, par exemple des polymères acryliques, comme liant d'une cathode au bioxyde de manganèse $MnO_2$. Le brevet US-4,465,747 divulgue l'utilisation particulière d'un copolymère d'éthylène et d'acide acrylique comme liant de la cathode d'un générateur à anode de lithium métallique.

La plupart de ces liants présentent l'inconvénient de se dégrader dans l'électrolyte organique, notamment lorsque la tension de fonctionnement est supérieure à 3V ou/et lorsque la température du générateur devient supérieure à la température ambiante. Il en résulte une perte d'adhésion et la destruction de l'électrode.

La présente invention a pour but de proposer une électrode flexible de générateur à électrolyte liquide organique capable de fonctionner à une tension supérieure à 3 Volts en restant électrochimiquement et mécaniquement stable pendant toute sa durée de fonctionnement.

L'objet de la présente invention est un générateur électrochimique rechargeable à électrolyte liquide organique dont la tension moyenne en décharge est supérieure à 3 Volts, comportant au moins une électrode comprenant un collecteur de courant revêtu d'une pâte contenant la matière électrochimiquement active et un liant. Ledit liant est un polymère partiellement salifié par un composé basiquee choisi parmi un hydroxyde d'ammonium quaternaire, comme l'hydroxyde de tétraméthylammonium, l'hydroxyde de tétraéthylammonium, l'hydroxyde de tétrabutylammonium, l'hydroxyde de tétrapropylammonium, l'hydroxyde de tétraméthylphénylammonium ou l'hydroxyde de tétraéthylphénylammonium, l'hydroxyde de tétraalkylphosphonium, l'éthanolamine, la triéthanolamine, la créatinine, ledit polymère étant choisi parmi les polymères de l'acide acrylique, l'acide métacrylique, l'acrylamide, l'acide itaconique, l'acide sulfonique, leurs copolymères et leurs mélanges, notamment les copolymères des monomères précédemment cités et les mélanges de polymères choisis parmi un polymère et un copolymère précédemment cité.

Le liant peut être par exemple un homopolymère de l'acide acrylique, l'acide métacrylique, l'acide itaconique, ou de l'acide sulfonique, un polymère de l'amide associée à ces acides, un copolymère de l'acide sulfonique et de l'acide acrylique, etc... qui ont été partiellement salifiés.

La neutralisation s'effectue par réaction avec un composé basique possèdant un cation suffisamment volumineux pour écarter les chaînes polymériques et conférer la souplesse nécessaire à l'électrode. L'acide est partiellement salifié par réaction acido-basique, selon la réaction pour l'acide acrylique par exemple :

$$CH_2=CH\text{-}CO\text{-}O\text{-}H + B\text{-}OH \rightarrow CH_2=CH\text{-}CO\text{-}O^-,B^+ + H_2O$$

Ce qui conduit à la création d'une liaison ionique avec le cation de la base. Cette liaison est réversible et mobile le long de la chaîne polymérique.

Ledit polymère est salifié dans une proportion comprise entre 5% et 90%. La neutralisation partielle des fonctions acides permet d'ajuster la viscosité de la pâte en augmentant la surface de contact des chaînes polymériques avec le solvant. Par ce moyen on peut également améliorer la flexibilité finale de l'électrode en réduisant les interactions inter-chaînes. La neutralisation complète doit être évitée car elle entraîne la perte de la propriété d'adhérence liée à la présence de groupement carboxyles.

La réactivité de ces polymères vis à vis du lithium est modérée et leur stabilité dimensionnelle peut rendre superflue leur réticulation. Le liant est un polymère linéaire ou réticulé qui a de préférence une masse moléculaire comprise entre 1 000 et 10 000 000.

Ces polymères ont l'avantage d'être facilement solubles ou dispersables dans l'eau, dans certains solvants à liaison hydrogène et dans les mélanges de ces solvants. On peut par exemple utiliser comme solvants un alcool, une amine, le dioxane, la N-méthylpyrrolidone (NMP) . Les mélanges de polymères de caractéristiques différentes peuvent permettre d'obtenir un effet de synergie de leurs propriétés.

Si nécessaire la viscosité de la pâte peut être ajustée pour faciliter l'enduction par le choix de la masse moléculaire du polymère, du pH de la solution ou dispersion de polymère, ou en effectuant une réticulation partielle.

De préférence la proportion dudit liant est comprise entre 1 et 20% en poids de ladite pâte. Une telle teneur confère à l'électrode une cohésion et une adhérence au support qui se conserve pendant toute sa durée d'utilisation tout en limitant la réduction de la quantité de matière active.

Dans le cas où l'électrode est la cathode d'un générateur électrochimique au lithium, ladite matière active est un matériau susceptible d'insérer du lithium dans sa structure à haut potentiel (supérieur à 2,5V/Li) choisie parmi un oxyde de métaux de transition, un sulfure, un sulfate et leurs mélanges.

Les sulfures peuvent être par exemple $TaS_2$, $NbS_2$, $VS_2$, etc..., et les sulfates peuvent être par exemple des sulfates de métaux de transition comme $Fe(SO_4)_2$ ou $Ni(SO_4)_2$.

De préférence ledit oxyde de métaux de transition est choisi parmi l'oxyde de vanadium, les oxydes lithiés de manganèse comme par exemple $LiMn_2O_4$, nickel $LiNiO_2$, et cobalt $LiCoO_2$, et leurs mélanges. Ces oxydes peuvent contenir une proportion minoritaire d'un ou plusieurs éléments jouant le rôle de dopant.

Dans le cas où l'électrode est l'anode d'un générateur électrochimique au lithium, ladite matière active est un matériau carboné susceptible d'insérer du lithium dans sa structure à bas potentiel (inférieur à 1,5V/Li) choisi parmi un carbone cristallisé comme le graphite, un carbone peu cristallisé graphitable comme le coke, et un carbone peu cristallisé non-graphitable comme le noir de carbone et le carbone vitreux.

L'électrolyte liquide organique est constitué d'un solvant, ou mélange de solvants dans lequel est dissous un sel. Dans le cas d'un générateur électrochimique au lithium, ledit électrolyte comprend un solvant organique choisi parmi un éther, un ester et leurs mélanges, lesdits esters étant choisis parmi les carbonates de propylène, d'éthylène, de butylène, de diéthyle, de diméthyle, et leurs mélanges. Dans ce cas ledit électrolyte comprend un sel de lithium choisi parmi le perchlorate de lithium $LiClO_4$, l'hexafluoroarsénate de lithium $LiAsF_6$, l'hexafluorophosphate de lithium $LiPF_6$, le tétrafluoroborate de lithium $LiBF_4$, le trifluorométhanesulfonate de lithium $LiCF_3SO_3$, le trifluorométhanesulfonimide de lithium $LiN(CF_3SO_2)_2$ (LiTFSI), ou le trifluorométhanesulfoneméthide de lithium $LiC(CF_3SO_2)_3$ (LiTFSM)

La présente invention a également pour objet un procédé de fabrication d'une électrode de générateur comportant les étapes suivantes:

- on prépare une pâte en ajoutant ladite matière active en poudre à une solution dudit liant,
- on met en forme ladite électrode en étalant ladite pâte sur un feuillard d'un métal choisi de préférence parmi le cuivre, le nickel, l'aluminium, et l'acier inoxydable,
- on sèche ladite électrode à une température comprise entre 60°C et 120°C pour évaporer les solvants,
- on calandre ladite électrode jusqu'à l'obtention d'une porosité de préférence comprise entre 20% et 60%.

Selon une variante ladite pâte contient en outre des additifs, comme par exemple un matériau conducteur ou un agent de texture. C'est notamment le cas de l'électrode positive lorsque la matière active est un oxyde lithié d'un métal de transition.

D'autres caractéristiques et avantages de la présente invention apparaîtront au cours des exemples suivants de réalisation, donnés bien entendu à titre illustratif et non limitatif, et dans le dessin annexé sur lequel:

- la figure 1 représente le premier cycle d'une électrode selon l'art antérieur ayant comme liant du PVDF,
- la figure 2 représente l'évolution de la capacité en cyclage de l'électrode de la figure 1,
- la figure 3 est analogue à la figure 1 pour une électrode selon l'art antérieur ayant comme liant un homopolymère de l'acide acrylique non salifié,
- la figure 4 est analogue à la figure 2 pour l'électrode de la figure 3,
- la figure 5 est analogue à la figure 1 pour une électrode selon l'art antérieur ayant comme liant un homopolymère de l'acide acrylique non salifié,
- la figure 6 est analogue à la figure 2 pour l'électrode de la figure 5,
- la figure 7 est analogue à la figure 1 pour une électrode selon l'invention ayant comme liant un homopolymère de l'acide acrylique salifié par l'éthanolamine,
- la figure 8 est analogue à la figure 2 pour l'électrode de la figure 7,
- la figure 9 est analogue à la figure 1 pour une électrode selon l'invention ayant comme liant un homopolymère de l'acide acrylique salifié par $N(CH_3)_4OH$,
- la figure 10 est analogue à la figure 2 pour l'électrode de la figure 9,
- la figure 11 est analogue à la figure 1 pour une électrode selon l'art antérieur ayant comme liant un copolymère de l'acide acrylique non salifié,
- la figure 12 est analogue à la figure 2 pour l'électrode de la figure 11.

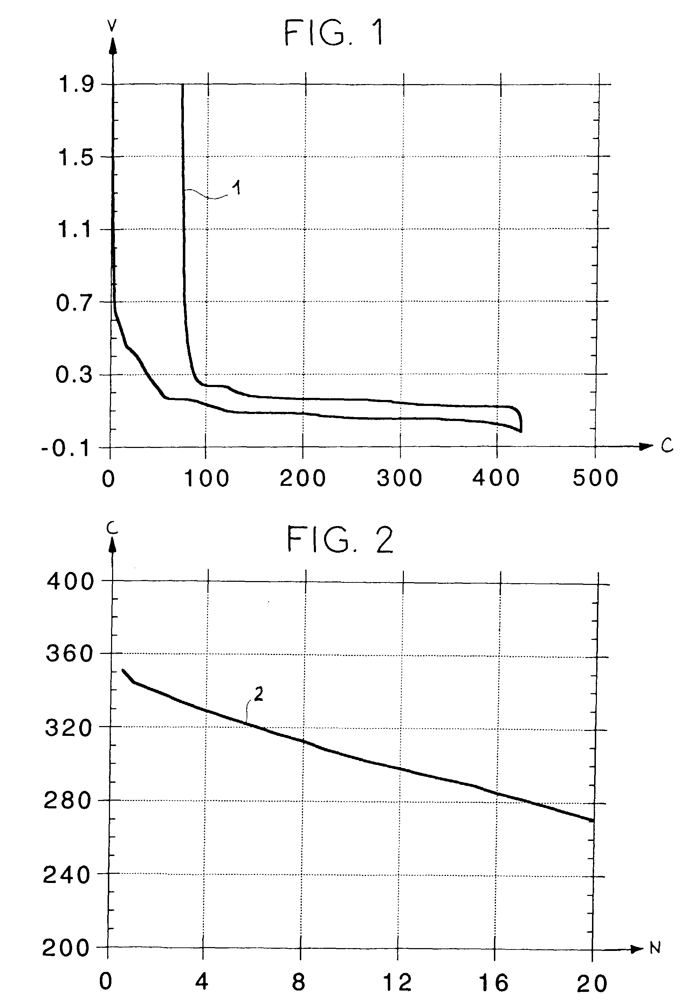

Sur les figures 1, 3, 5, 7, 9 et 11 la capacité déchargée C en mAh/g est donné en abscisse et en ordonnée la tension V en volts.

Sur les figures 2, 4, 6, 8, 10 et 12 la capacité déchargée C en mAh/g est donné en ordonnée et en abscisse le nombre de cycles N.

EXEMPLE 1

On réalise une électrode I selon l'art antérieur de la manière suivante. On prépare une pâte en ajoutant 90g de poudre de graphite dans 100g d'une solution à 10% en poids de polyfluorure de vinylidène (PVDF) dans la N-méthylpyrolidone (NMP). L'électrode est mise en forme par étalement de la pâte sur un feuillard de cuivre. Après évaporation des solvants par séchage à 120°C, la composition est de 90% en poids de graphite et 10% en poids de polymère. On obtient une électrode qui présente une souplesse suffisante pour être aisément manipulable.

On réalise un générateur électrochimique rechargeable de type bouton comportant l'électrode préparée précédemment, une contre-électrode en lithium métallique, un séparateur de polypropylène microporeux, et un électrolyte constitué d'une solution de concentration 1M d'hexafluorophosphate de lithium $LiPF_6$ dans un mélange de solvants organiques. Le mélange de solvants se compose en volume de 20% de carbonate de propylène PC, de 20% de carbonate d'éthylène EC, et de 60% de carbonate de diméthyle DMC.

On effectue un cyclage du générateur à une densité de courant de 20mA par gramme de graphite. Le premier cycle est réalisé à la température ambiante (25°C) et les cycles suivants à 60°C.

La courbe 1 de la figure 1 montre que les pertes faradiques au premier cycle correspondant aux réactions irréversibles (passivation, exfoliation) sont importantes. La perte de capacité au cours du cyclage est de 23% en 20 cycles, comme on le voit sur la courbe 2 de la figure 2.

EXEMPLE 2

On réalise une électrode II selon l'art antérieur de la manière suivante. On prépare une pâte en ajoutant 100g de poudre de graphite dans 200g d'une solution à 5% en poids d'un homopolymère de l'acide polyacrylique, de masse moléculaire 250 000, dans un mélange équimassique eau-alcool (éthanol). L'électrode est mise en forme par étalement de la pâte sur un feuillard de cuivre. Après évaporation des solvants par séchage à 60°C, la composition est de 90% en poids de graphite et 10% en poids de polymère. L'électrode obtenue est cassante et difficilement manipulable.

On réalise un générateur électrochimique rechargeable de type bouton analogue à celui décrit dans l'exemple 1 mais comportant l'électrode préparée précédemment.

On effectue un cyclage du générateur à une densité de courant de 20mA par gramme de graphite. Les cinq premiers cycles sont réalisé à la température ambiante (25°C) et les cycles suivants à 60°C.

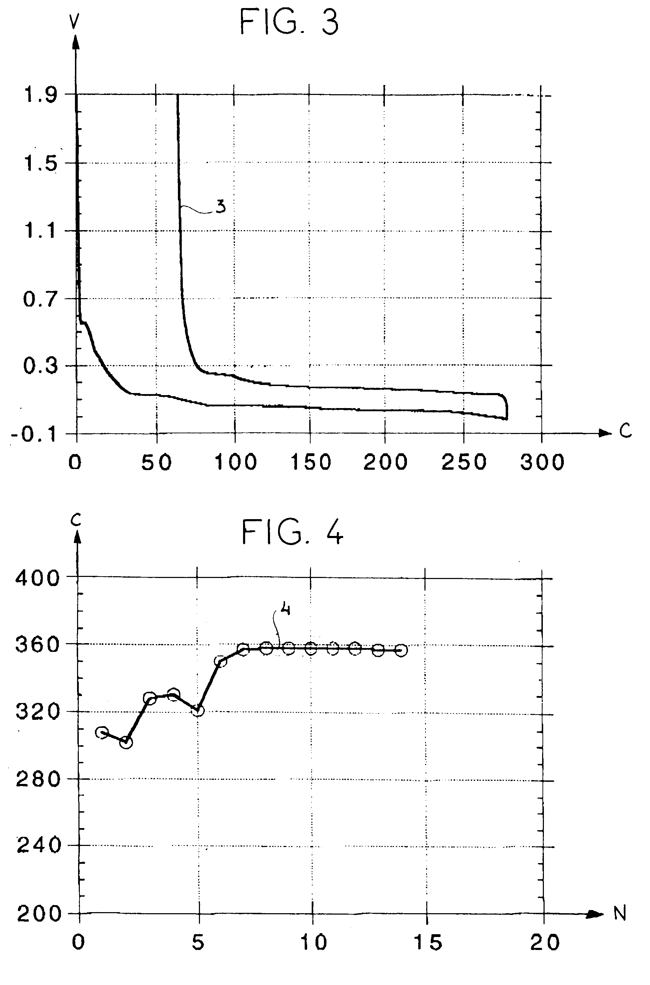

La courbe 3 de la figure 3 montre que les pertes faradiques au premier cycle correspondant aux réactions irréversibles (passivation, exfoliation) sont faibles. La capacité est stable au cours du cyclage comme on le voit sur la courbe 4 de la figure 4.

EXEMPLE 3

On réalise une électrode III selon l'art antérieur de la même manière que dans l'exemple 2, à l'exception de la composition de la pâte qui est préparée en ajoutant 100g de poudre de graphite à 175g d'une solution à 4% d'un homopolymère de l'acide polyacrylique, de masse moléculaire 250 000, dans un mélange équimassique eau-NMP. Après évaporation des solvants par séchage à 60°C, la composition est de 93% en poids de graphite et 7% en poids de polymère. L'électrode obtenue est cassante et difficilement manipulable.

Un cyclage est réalisé dans les conditions décrites dans l'exemple 2, à l'exception du fait que les cycles 14 à 16 sont effectués à 80°C et les cycles 17 à 19 le sont à 100°C.

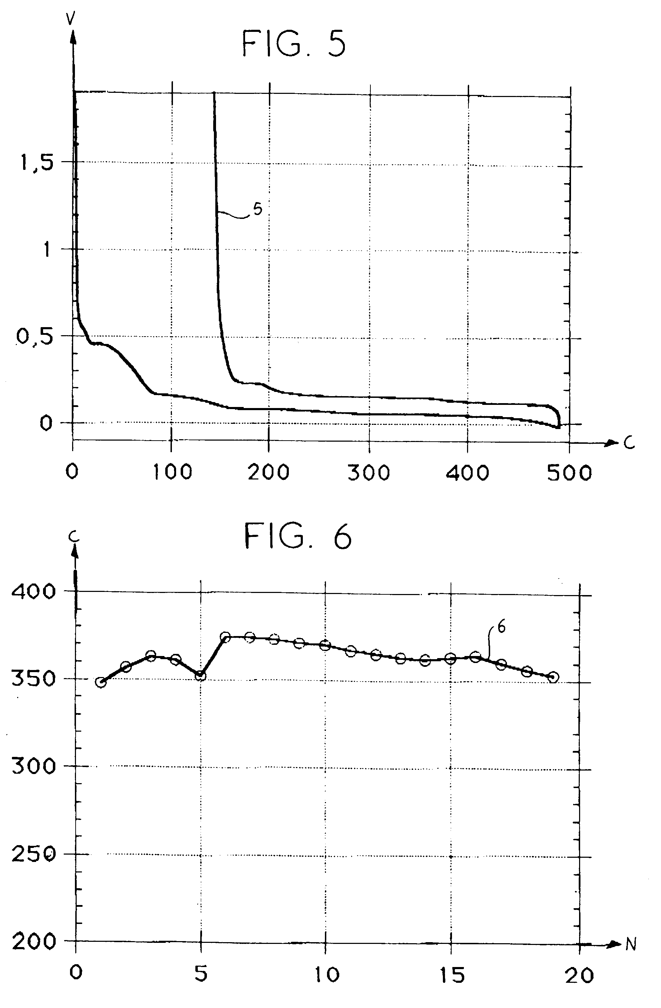

La courbe 5 de la figure 5 montre que les pertes faradiques au premier cycle correspondant aux réactions irréversibles (passivation, exfoliation) sont faibles. La capacité est stable au cours du cyclage même à une température de 100°C, comme on le voit sur la courbe 6 de la figure 6.

EXEMPLE 4

On réalise une électrode IV selon l'invention de la même manière que dans l'exemple 2, à l'exception de la composition de la pâte qui est préparée ajoutant 150g de poudre de graphite dans 307,5g d'une solution à 2,5% d'un homopolymère de l'acide polyacrylique, salifié à 50% par l'éthanolamine et de masse moléculaire 250 000, dans un mélange équimassique eau-NMP. Après évaporation des solvants par séchage à 60°C, la composition est de 92,5% en poids de graphite et 7,5% en poids de polymère salifié. On obtient une électrode qui présente une souplesse suffisante pour être aisément manipulable.

Un cyclage est réalisé dans les conditions décrites dans l'exemple 2, à l'exception du fait que les deux premiers cycles sont effectués à la température ambiante et les cycles suivants le sont à 60°C.

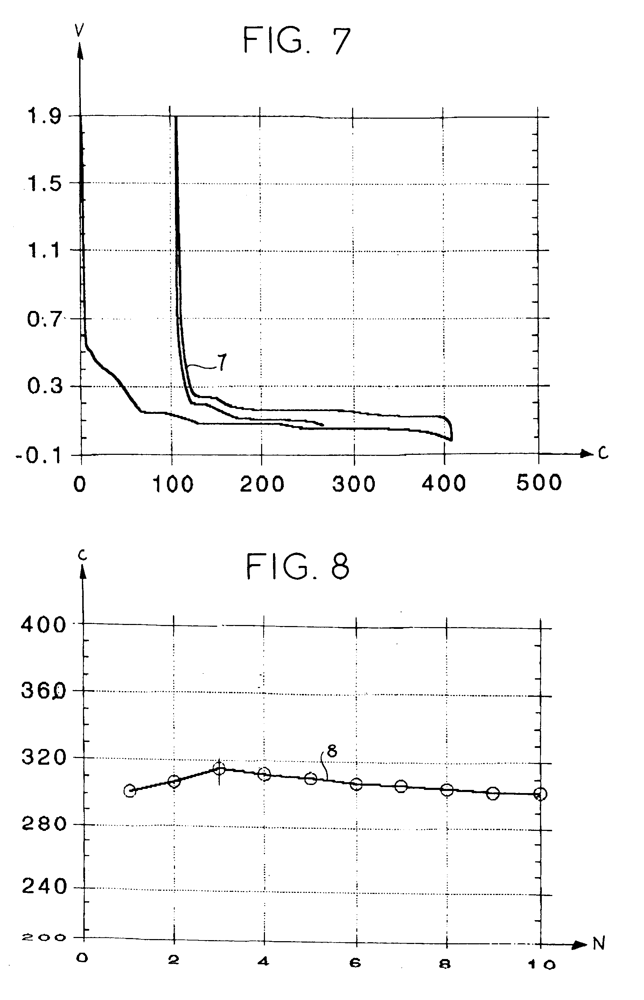

Les courbes 7 et 8 des figures 7 et 8 montrent que les performances électrochimiques n'ont pas été modifiées par la neutralisation partielle de l'acide, et avantageusement l'électrode présente une plus grande souplesse.

De la même manière que précédemment, on réalise une électrode V selon l'invention à l'exception de la composition de la pâte qui contient un homopolymère de l'acide polyacrylique salifié à 50% par la triéthanolamine. Les performances électrochimiques n'ont pas été modifiées, et l'électrode présente une bonne souplesse.

EXEMPLE 5

On réalise une électrode VI selon l'invention de la même manière que dans l'exemple 2, à l'exception de la composition de la pâte qui est préparée en ajoutant 100g de poudre de graphite dans 200g d'une solution à 5% en poids d'un homopolymère réticulé de l'acide polyacrylique dans un mélange équimassique eau-NMP. 50% des sites carboxyliques du polymère sont neutralisés par 3,165g d'hydroxyde de tétraméthylammonium $N(CH_3)_4OH$ en solution à 40% dans l'eau. Après évaporation des solvants par séchage à 60°C, la composition est de 92,5% en poids de graphite, 4,6% en poids de tétraméthylammonium et 2,9% en poids d'acide polyacrylique. On obtient une électrode qui présente une souplesse suffisante pour être aisément manipulable.

Un cyclage est réalisé dans les conditions décrites dans l'exemple 2, à l'exception du fait que les cycles sont effectués dans les conditions suivantes de régime et de température:

cycles 1 à 6: 20mAh/g à 60°C,
cycles 7 et 8: 20mAh/g à 25°C,
cycles 9 à 22: 50mAh/g à 60°C,
cycles 23 et 24: 20mAh/g à 25°C.

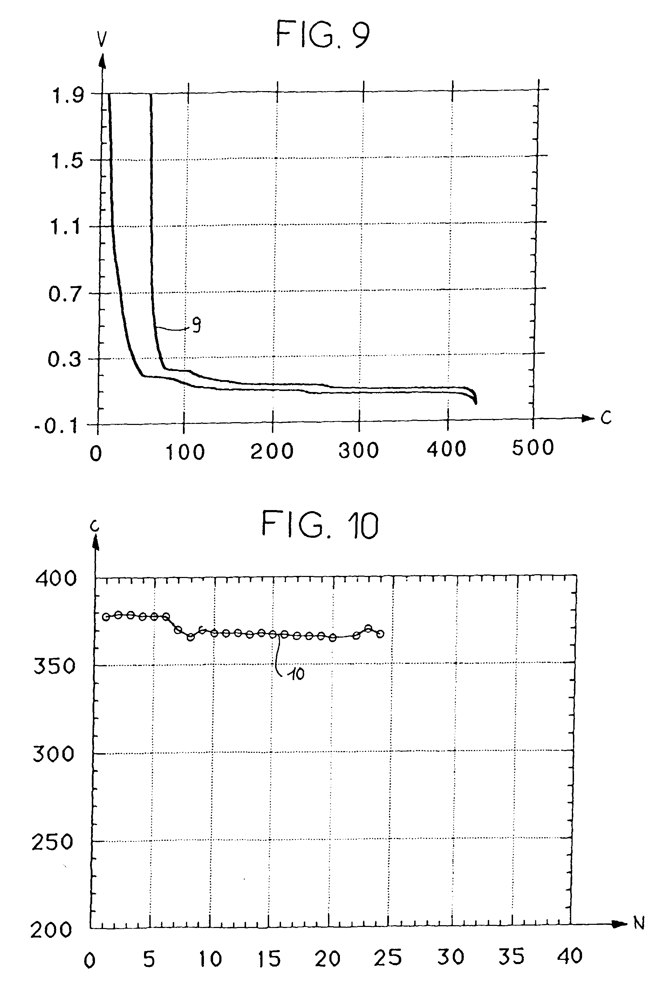

La courbe 9 de la figure 9 montre le premier cycle. La capacité est particulièrement stable au cours du cyclage même à une température de 60°C, comme on le voit sur la courbe 10 de la figure 10.

De la même manière que précédemment, on réalise des éklectrodes VII à XII dont le liant est un homopolymère de l'acide polyacrylique neutralisé par l'hydroxyde de tétraméthylammonium $N(CH_3)_4OH$. Les caractéristiques respectives des électrodes sont rassemblées ci-dessous.

| électrode n° | taux de neutralisation par la base | composition de l'électrode en poids | | flexibilité |
|---|---|---|---|---|
| | | $N(CH_3)_4OH$ | acide acrylique | |
| VII | 10% | - | - | acceptable |
| VI | 50% | 4,6% | 2,9% | bonne |

(suite)

| électrode n° | taux de neutralisation par la base | composition de l'électrode en poids | | flexibilité |
|---|---|---|---|---|
| | | N(CH$_3$)$_4$OH | acide acrylique | |
| VIII | 50% | 2,9% | 1,8% | bonne |
| IX | 60% | 2,8% | 2,2% | bonne |
| X | 70% | 2,8% | 2,5% | bonne |
| XI | 80% | 2,8% | 2,9% | bonne |
| XII | 90% | 2,8% | 3,2% | bonne |

EXEMPLE 6

On réalise une électrode XIII selon l'invention de la même manière que dans l'exemple 5, à l'exception de la composition de la pâte qui est préparée en utilisant comme liant un homopolymère de l'acide polyacrylique salifié à 50% par l'hydroxyde de tétraéthylammonium. L'électrode présente une flexibilité satisfaisante et ses caractéristiques électrochimiques en cyclage sont analogues aux électrodes de l'exemple 5.

EXEMPLE 7

On réalise des électrodes XIV et XV selon l'invention de la même manière que dans l'exemple 5, à l'exception de la composition de la pâte qui est préparée en utilisant comme liant un homopolymère de l'acide polyacrylique salifié par l'hydroxyde de tétrabutylammonium, respectivement à 10% et 90%. Les électrodes présentent une flexibilité satisfaisante et leurs caractéristiques électrochimiques en cyclage sont analogues aux électrodes de l'exemple 5.

EXEMPLE 8

On réalise des électrodes XVI à XVIII selon l'invention de la même manière que dans l'exemple 5, à l'exception de la composition de la pâte qui est préparée en utilisant comme liant un homopolymère de l'acide polyacrylique salifié par l'hydroxyde de tétraméthylphénylammonium. Les caractéristiques respectives des électrodes sont rassemblées ci-dessous. Leurs performances électrochimiques en cyclage sont analogues aux électrodes de l'exemple 5.

| électrode n° | taux de neutralisation | flexibilité |
|---|---|---|
| XVI | 10% | acceptable |
| XVII | 20% | acceptable |
| XVIII | 40% | acceptable |
| XIX | 70% | bonne |

EXEMPLE 9

On réalise une électrode XX selon l'art antérieur de la même manière que dans l'exemple 2, à l'exception de la composition de la pâte qui est préparée ajoutant 100g de poudre de graphite à 5,5g d'un copolymère de l'acide polyacrylique et de l'acrylamide en solution à 5% dans l'eau. Après évaporation des solvants par séchage à 60°C, la composition est de 90% en poids de graphite et 10% en poids de copolymère.

Un cyclage est réalisé dans les conditions décrites dans l'exemple 2, à l'exception du fait que le premier cycle est effectué à un régime de 20mAh/g à la température ambiante (25°C). Les cycles suivants sont effectués à 60°C, au même régime jusqu'au cycle 22, puis à 50mAh/g.

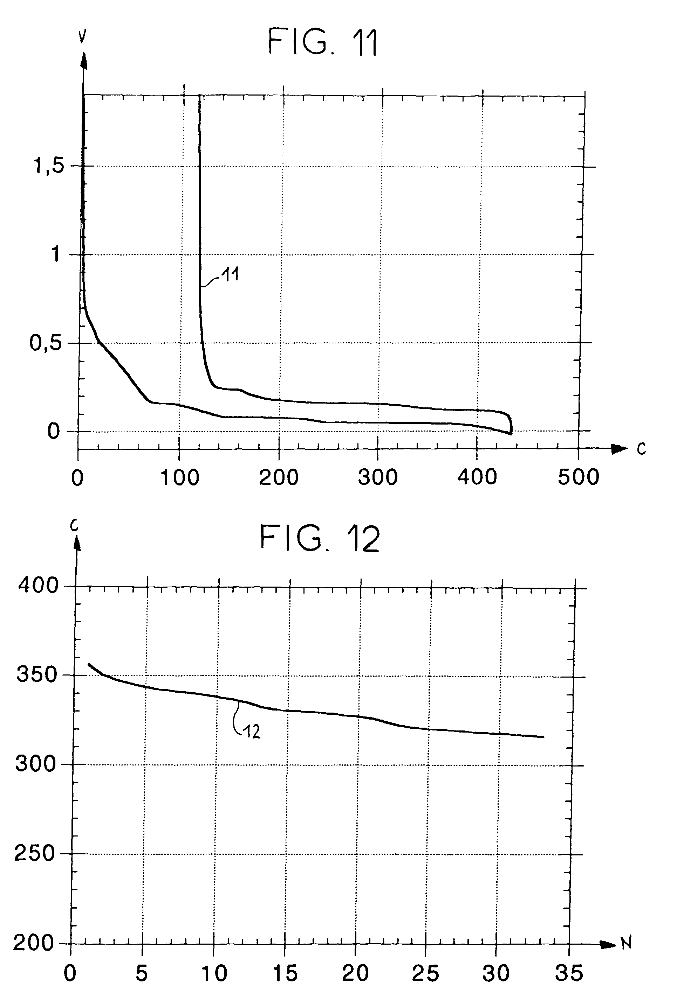

La courbe 11 de la figure 11 montre le premier cycle. La capacité décroît peu au cours du cyclage même à une température de 60°C, comme on le voit sur la courbe 12 de la figure 12.

**Revendications**

1. Générateur électrochimique rechargeable à électrolyte liquide organique dont la tension moyenne en décharge est supérieure à 3 volts, comportant au moins une électrode comprenant un collecteur de courant revêtu d'une pâte contenant la matière électrochimiquement active et un liant, caractérisé par le fait que ledit liant est un polymère partiellement salifié par un composé basique choisi parmi un hydroxyde d'ammonium quaternaire, l'hydroxyde de tétraalkylphosphonium, l'éthanolamine, la triéthanolamine, la créatinine, ledit polymère étant choisi parmi les polymères de l'acide acrylique, l'acide métacrylique, l'acrylamide, l'acide itaconique, l'acide sulfonique, leurs copolymères et leurs mélanges.

2. Générateur selon la revendication 1, dans lequel ledit polymère est salifié dans une proportion comprise entre 5% et 90%.

3. Générateur selon l'une des revendications 1 et 2, dans lequel la proportion dudit liant est comprise entre 1% et 20% en poids de ladite pâte.

4. Générateur selon l'une des revendications précédentes, dans lequel ladite matière active est choisie parmi un oxyde de métaux de transition, un sulfure, un sulfate et leurs mélanges.

5. Générateur selon la revendication 4, dans lequel ledit oxyde de métaux de transition est choisi parmi l'oxyde de vanadium, les oxydes lithiés de manganèse, nickel, et cobalt, et leurs mélanges.

6. Générateur selon l'une des revendications 1 à 3, dans lequel ladite matière active est un matériau carboné susceptible d'insérer du lithium dans sa structure choisi parmi le graphite, le coke, le noir de carbone et le carbone vitreux.

7. Générateur selon l'une des revendications précédentes, dans lequel ledit électrolyte comprend un sel de lithium choisi parmi le perchlorate de lithium, l'hexafluoroarsénate de lithium, l'hexafluorophosphate de lithium, le tétrafluoroborate de lithium, le trifluorométhanesulfonate de lithium, le trifluorométhanesulfonimide de lithium, et le trifluorométhanesulfoneméthide de lithium.

8. Générateur selon l'une des revendications précédentes, dans lequel ledit électrolyte comprend un solvant organique choisi parmi un éther, un ester et leurs mélanges, lesdits esters étant choisis parmi les carbonates de propylène, d'éthylène, de butylène, de diéthyle, de diméthyle, et leurs mélanges.

9. Procédé de fabrication d'une électrode de générateur selon l'une des revendications précédentes, comportant les étapes suivantes:

- on prépare une pâte en ajoutant ladite matière active en poudre à une solution dudit liant,
- on met en forme ladite électrode en étalant ladite pâte sur un feuillard d'un métal choisi de préférence parmi le cuivre, le nickel, l'aluminium, et l'acier inoxydable,
- on sèche ladite électrode à une température comprise entre 60°C et 120°C pour évaporer les solvants,
- on calandre ladite électrode jusqu'à l'obtention d'une porosité de préférence comprise entre 20% et 60%.

10. Procédé selon la revendication 9, dans lequel ladite pâte contient en outre des additifs.

# FIG. 1

# FIG. 2

# FIG. 3

# FIG. 4

FIG. 5

FIG. 6

# FIG. 7

# FIG. 8

# FIG. 9

# FIG. 10

## FIG. 11

## FIG. 12

**Office européen des brevets**

**RAPPORT DE RECHERCHE EUROPEENNE**

Numero de la demande

EP 97 40 1584

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | CHEMICAL ABSTRACTS, vol. 119, no. 20, 15 novembre 1993 Columbus, Ohio, US; abstract no. 207042, ISHIHARA, YOJI ET AL: "Secondary nonaqueous-electrolyte batteries with improved anode binder" XP002028247 * abrégé * & JP 04 370 661 A (TOSHIBA BATTERY CO., LTD., JAPAN) --- | 1,4,5,7, 8 | H01M4/62 H01M10/40 H01M4/04 |
| A | CHEMICAL ABSTRACTS, vol. 123, no. 4, 24 juillet 1995 Columbus, Ohio, US; abstract no. 37256, OOHANA, YORITO ET AL: "Nonaqueous-electrolyte secondary batteries and their preparation" XP002028245 * abrégé * & JP 07 105 970 A (MATSUSHITA ELECTRIC IND CO LTD, JAPAN) --- | 1,9,10 | |
| A | US 5 399 447 A (CHALONER-GILL BENJAMIN ET AL) 21 mars 1995 * colonne 7, ligne 61 - colonne 8, ligne 19; revendication 1 * * colonne 7, ligne 7 - ligne 24 * --- | 1,2 | DOMAINES TECHNIQUES RECHERCHES (Int.Cl.6) H01M |
| A | EP 0 626 734 A (VARTA BATTERIE) 30 novembre 1994 * revendications 1-3,7,9; exemples 1,3 * --- | 1,3-8 | |
| A | EP 0 563 988 A (FUJI PHOTO FILM CO LTD) 6 octobre 1993 * page 7, ligne 6 - ligne 50 * * page 10, ligne 19 - ligne 22 * --- | 1,4,5,7, 8 | |

-/--

Le présent rapport a été établi pour toutes les revendications

| Lieu de la recherche | Date d'achèvement de la recherche | Examinateur |
|---|---|---|
| LA HAYE | 2 octobre 1997 | D'hondt, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe a la base de l'invention
E : document de brevet antérieur, mais publié à la date de dépôt ou après cette date
D : cité dans la demande
L : cité pour d'autres raisons

& : membre de la même famille, document correspondant

**Office européen des brevets**

**RAPPORT DE RECHERCHE EUROPEENNE**

Numero de la demande

EP 97 40 1584

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP 0 603 397 A (ASAHI CHEMICAL IND) 29 juin 1994<br>* page 7, ligne 35 - ligne 52; revendications 1,2,5,8; tableau 4 *<br>--- | 1 | |
| A | CHEMICAL ABSTRACTS, vol. 121, no. 6, 8 août 1994<br>Columbus, Ohio, US;<br>abstract no. 61489,<br>SASAKI, YASUHIKO ET AL: "Secondary nonaqueous batteries and manufacture of electrode active mass for the batteries"<br>XP002028249<br>* abrégé *<br>& JP 06 096 759 A (SEIKO INSTR & ELECTRONICS, JAPAN;SEIKO ELECTRONIC COMPONENTS)<br>--- | 1 | |
| A | CHEMICAL ABSTRACTS, vol. 113, no. 8, 20 août 1990<br>Columbus, Ohio, US;<br>abstract no. 62635,<br>OKAZAKI, YOJI: "Cathodes for organic-electrolyte secondary batteries"<br>XP002028248<br>* abrégé *<br>& JP 02 082 454 A (FURUKAWA ALUMINUM CO., LTD., JAPAN)<br>--- | 1 | DOMAINES TECHNIQUES RECHERCHES (Int.Cl.6) |
| A | PATENT ABSTRACTS OF JAPAN<br>vol. 008, no. 078 (E-237), 10 avril 1984<br>& JP 58 225567 A (FUJI DENKI KAGAKU KK), 27 décembre 1983,<br>* abrégé *<br>--- | 1 | |
| A | GB 2 181 884 A (EVER READY LTD) 29 avril 1987<br>--- | 1 | |
| | -/-- | | |

Le présent rapport a été établi pour toutes les revendications

| Lieu de la recherche | Date d'achèvement de la recherche | Examinateur |
|---|---|---|
| LA HAYE | 2 octobre 1997 | D'hondt, J |

EP 0 817 296 A1

**Office européen des brevets** **RAPPORT DE RECHERCHE EUROPEENNE**

Numero de la demande
EP 97 40 1584

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | EP 0 620 606 A (FURUKAWA BATTERY CO LTD ;DAINIPPON PRINTING CO LTD (JP)) 19 octobre 1994 <br> * page 4, ligne 25 - ligne 49; revendication 1; exemple 2 * <br> * page 5, ligne 17 - ligne 30 * <br> * page 8, ligne 1 - ligne 3 * <br> ----- | 9,10 | |

DOMAINES TECHNIQUES RECHERCHES (Int.Cl.6)

Le présent rapport a été établi pour toutes les revendications

| Lieu de la recherche | Date d'achèvement de la recherche | Examinateur |
|---|---|---|
| LA HAYE | 2 octobre 1997 | D'hondt, J |